# EUROPÄISCHE PATENTSCHRIFT

(11) **EP 0 463 337 B1**
(45) Veröffentlichungstag und Bekanntmachung des Hinweises auf die Patenterteilung: **27.10.1993**
(21) Anmeldenummer: 91107581.0
(22) Anmeldetag: 10.05.1991
(51) Int. Cl.: F16B 39/12

(54) **Stell- und Kontereinheit**
Locking and counterlocking assembly
Dispositif de serrage et de contre-serrage

(30) Priorität: 27.06.1990 DE 4020462
(43) Veröffentlichungstag der Anmeldung: 02.01.1992
(73) Patentinhaber: INA Wälzlager Schaeffler KG, 91063 Herzogenaurach (DE)
(72) Erfinder: Oetjen, Jürgen Dipl.-Ing., W-8522 Herzogenaurach (DE)

(56) Entgegenhaltungen:
- DE-A- 3 521 563
- GB-A- 510 144
- GB-A- 2 134 615
- GB-A- 2 144 819

## Beschreibung

Die Erfindung betrifft eine Stell- und Kontereinheit, bestehend aus einer Stellmutter, einer Kontermutter und mindestens zwei in der Stellmutter eingeschraubten und an der Kontermutter abgestützten Zugschrauben, wobei zwischen den einander zugewandten Flächen der beiden Muttern axiale Abstützmittel vorgesehen sind und beide Muttern axial miteinander fluchtende, identische Gewinde aufweisen.

Bei einer solchen, aus dem Dokument DE-A-3 521 563 bekannten Stell- und Kontereinheit ist die zwischen den beiden Muttern vorgesehene Abstützung als ringförmiger Vorsprung an der der Stellmutter zugewandten Fläche der Kontermutter ausgebildet. Die Stellmutter besteht aus einem eigentlichen Stellabschnitt und einer ringförmigen Zunge, die über einen Steg derart miteinander in Verbindung stehen, daß der freie Zungenrand dem ringförmigen Abstützvorsprung der Kontermutter gegenüberliegt. Durch Anziehen der die beiden Muttern verbindenden Zugschrauben wird der Abstand zwischen diesen unter Verbiegung der Zunge verkürzt, wodurch die beiden Muttern aufeinander zu bewegt werden und die Stellmutter gekontert wird.

Ein Nachteil dieser bekannten Einheit besteht darin, daß wegen der zur Konterung erforderlichen Verbiegung der Zunge die Zugschrauben mit einer bestimmten, verhältnismäßig großen Kraft angezogen werden müssen. Außerdem muß vor der Herstellung der Gewinde in den beiden Muttern, die hierzu mittels der Zugschrauben miteinander zu verbinden sind, darauf geachtet werden, daß die Zugschrauben nur so weit angezogen werden, daß die beiden Muttern noch ohne Verbiegung der Zunge über diese und den ringförmigen Abstützvorsprung in gegenseitiger Anlage stehen.

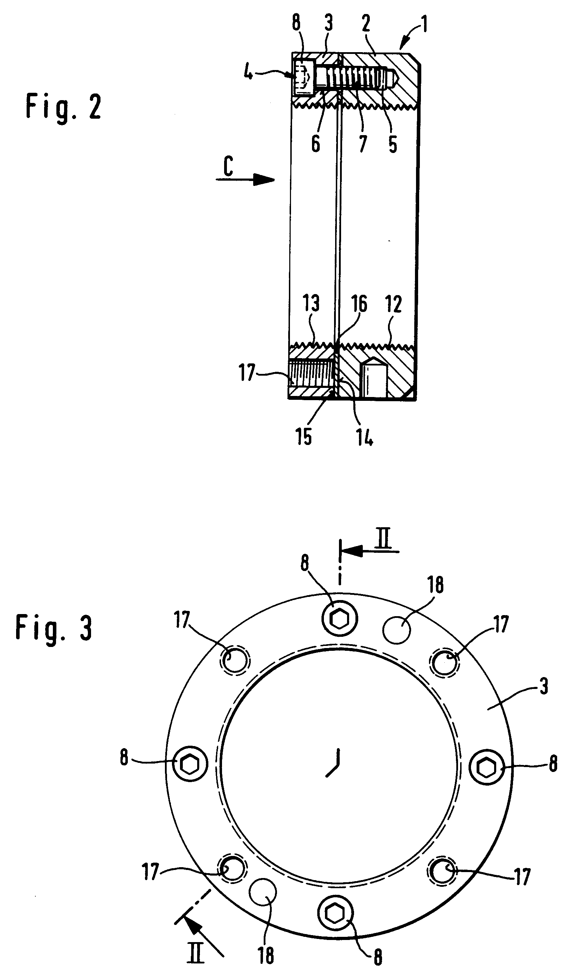

Aus dem Dokument GB-A-2 144 819 ist eine Stell- und Kontereinheit bekannt, bei der zwischen die Stellmutter und die Kontermutter zum Zwecke des Gewindeschneidens eine Abstandsscheibe konstanter Dicke gelegt wird, die anschließend wieder herausgenommen wird. Wenn die Muttern auf die Spindel aufgeschraubt sind, erfolgt der Kontervorgang durch festes Anziehen von Zugschrauben. Da hierbei, wie z. B. aus Figur 2 erkennbar ist, zwischen den Muttern ein freier Abstand verbleibt, besteht die Gefahr, daß die Muttern dieser Einheit sich ebenso, wie die Muttern der eingangs genannten Einheit bei dem von den Zugschrauben bewirkten Aneinanderziehen verformen, wenn sie nur geringe axiale Abmessungen aufweisen sollen, um Bauraum einzusparen. Das kann sich aber insbesondere dann sehr nachteilig auswirken, wenn die Mantelfläche der Stellmutter beispielsweise als Wälzlagerlaufbahn dienen soll. Abstützmittel für den Kontervorgang sind zwischen der Stellmutter und der Kontermutter bei dieser Einheit nicht vorgesehen.

Der Erfindung liegt die Aufgabe zugrunde, die Stell- und Kontereinheit so zu verbessern, daß beim festen Anziehen der Zugschrauben für den Kontervorgang eine Verformung der Stellmutter oder der Kontermutter hinreichend vermieden wird.

Diese Aufgabe wird durch die Merkmale des Anspruch 1 gelöst, wobei, unter anderem für den Kontervorgang die Abstützmittel in ihrer Axialerstreckung, die den Abstand zwischen der Stellmutter und der Kontermutter bestimmt, verkürzbar ausgebildet sind. Diese Lösung ermöglicht es, die für die Herstellung der Gewinde erforderlichen axialen Abstützmittel auch für den Kontervorgang auszunutzen. Nach deren Verkürzung begrenzen diese den Weg der beiden Muttern gegeneinander, wodurch die Gewinde nur mit einer durch das Axialmaß der Abstützmittel bestimmten Kraft belastet sind, obwohl die Zugschrauben beliebig fest angezogen werden können. Die Muttern verformen sich bei einem solchen Kontervorgang nicht. Ihre Annäherung zueinander wird nur um den Weg ermöglicht, der für das Verspannen der Gewinde erforderlich ist.

Durch die erfindungsgemäße Verkürzbarkeit der Axialerstreckung der Abstützung zwischen den beiden Muttern besteht also die Möglichkeit, die beiden Muttern mittels der Zugschrauben einfach gegeneinander zu schrauben und danach die an beiden Muttern identisch ausgebildeten Gewinde für den Sitz der Muttern auf dem Spindelgewinde in einem einzigen Gewindeschneidvorgang herzustellen. Die erfindungsgemäße Ausbildung gewährleistet eine einfache Konterung durch gegenseitiges Verschrauben der beiden Muttern mittels der Zugschrauben, wenn nach dem Gewindeschneiden und anschließenden Lösen der Zugschrauben die Abstützung in ihrer Axialerstreckung verändert wird und die Zugschrauben wieder festgeschraubt werden.

Vorteilhaft sind als axiale Abstützmittel mindestens zwei Schrauben, vorzugsweise drei Schrauben, in die Kontermutter eingeschraubt, die sich an der der Kontermutter zugewandten Flache der Stellmutter abstützen. Mit diesen Schrauben kann der gewünschte Abstand der beiden Muttern sowohl für das Herstellen des Gewindes als auch für das spätere Kontern beider Muttern eingestellt werden.

Nach einer anderen Ausführungsform kann als axiales Abstützmittel eine in ihrer Dicke veränderliche Scheibe vorgesehen sein. Diese Scheibe kann aus einem schälbaren Schichtblech bestehen. In diesem Fall werden die beiden Muttern unter Zwischenlegung der Scheibe mittels der Zugschrauben miteinander verschraubt, wonach die an beiden Muttern identischen Gewinde hergestellt werden. Anschließend werden die Zugschrauben gelöst und die Scheibe wird zwischen den Muttern entnommen. Sie wird entweder durch eine dünnere Scheibe ersetzt, oder es wird von der Schichtblechscheibe mindestens eine Blechschicht abgeschält. Danach werden die beiden Muttern unter Zwischenlegung der dann dünneren Scheibe mittels der Zugschrauben wieder lose miteinander verbunden. Dies ist der Einbauzustand. Das Kontern der Stellmutter mittels der Kontermutter auf dem Spindelgewinde erfolgt durch endgültiges Festziehen der Zugschrauben. Die beiden vorstehend beschriebenen alternativen Ausbildungen bieten eine Möglichkeit zur einfachen Konterung durch festes Anziehen der Zugschrauben mit deren Nennanzugsmoment.

Da bei der zweiten Alternative zur Dickenveränderung der Scheibe die Muttern zunächst voneinander getrennt werden müssen, empfiehlt sich im Hinblick auf die in Umfangsrichtung korrekte Zuordnung der beiden Muttern nach dem Austausch der Scheiben bzw. dem Abschälen einer Blechschicht von der Scheibe die Positionierung der beiden Muttern gegeneinander durch Paßstiftbohrungen mit Paßstiften. Dadurch ist gewährleistet, daß die beiden Muttern in Umfangsrichtung in derselben Relativstellung zueinander wieder verbunden sind, die sie während des Gewindeschneidens eingenommen haben. Ebenso kann die Position der beiden Muttern gegeneinander durch ungleiche Teilung der Bohrungen und Gewinde für die Zugschrauben gesichert werden. Die dadurch bedingte, auf dem Umfang ungleich verteilte Zugkraft kann sich durch die erfindungsgemäße Abstützung nicht nachteilig auf die Muttern bei deren Konterung gegenüber dem Spindelgewinde auswirken.

Zum Lösen der Konterung nach dem Lösen der Zugschrauben empfiehlt sich eine Ausbildung der Kontermuttern mit Bohrungen mit Gewinde, um in dieses Entkonterungsschrauben einschrauben zu können, die gegen die der Kontermutter zugewandte Fläche der Stellmutter zur Anlage gebracht werden.

Ausführungsbeispiele der Erfindung sind in der Zeichnung dargestellt und werden im folgenden näher beschrieben. Es zeigen:
- Figur 1: einen Axialschnitt durch eine erste Ausführungsform;
- Figur 2: einen Axialschnitt durch eine zweite Ausführungsform;
- Figur 3: eine Ansicht der zweiten Ausführungsform in Richtung des Pfeiles C der Figur 2;

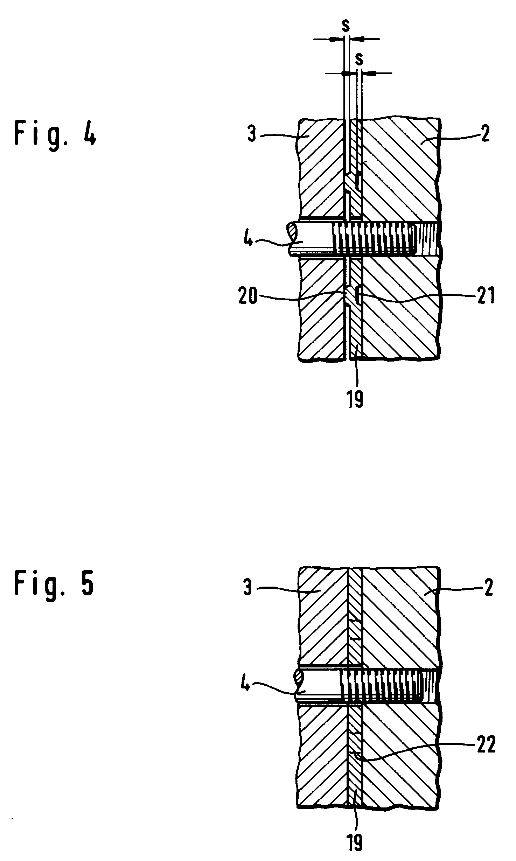

- Figur 4: einen Axialschnitt durch eine weitere Ausführungsform mit einer Noppen und Vertiefungen aufweisenden Scheibe und
- Figur 5: die Ausführungsform nach Figur 4 in gekontertem Zustand der Stelleinheit.

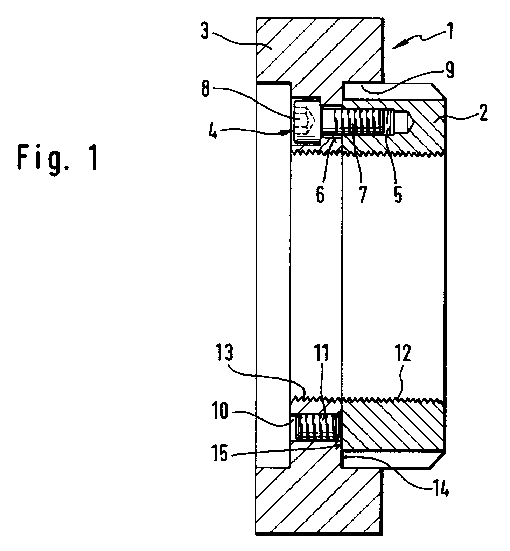

Die in Figur 1 dargestellte Ausführungsform einer erfindungsgemäßen Stell- und Kontereinheit 1 besteht aus einer Stellmutter 2, einer Kontermutter 3 und mehreren Zugschrauben 4, über die die beiden Muttern 2 und 3 miteinander verbunden sind. Hierzu ist in der Stellmutter eine Gewindebohrung 5 und in der Kontermutter eine Bohrung 6 zur frei hindurchführbaren Aufnahme des Schaftes 7 einer Zugschraube 4 vorgesehen. Die in die Stellmutter 2 eingeschraubten Zugschrauben 4 sind über ihren Schraubenkopf 8 an der Kontermutter 3 abgestützt. Bei der in Figur 1 dargestellten Ausführungsform ist die Stellmutter 2 in einer Ausnehmung 9 der Kontermutter 3 radial zentriert aufgenommen. In der Kontermutter 3 sind mindestens zwei Gewindebohrungen 10 zur Aufnahme je einer Schraube 11 vorgesehen. Diese Schrauben 11 sind vor der Herstellung der Gewinde 12 bzw. 13 in der Stellmutter 2 bzw. der Kontermutter 3 zunächst gegen die der Kontermutter 3 zugewandte Fläche 14 der Stellmutter 2 zur Anlage zu bringen und dann weiter in der Gewindebohrung 10 zu verschrauben, bis zwischen der Fläche 14 und der zugehörigen Paarungsfläche 15 der Kontermutter 3 ein Abstand erreicht ist, dessen Aufhebung, also Reduzierung auf Null, für die Konterung der Stellmutter 2 mittels der Kontermutter 3 ausreicht. Die Schrauben 11 dienen also zur gegenseitigen Abstandsabstützung der Muttern 2 und 3 entgegen der Wirkung der Zugschrauben 4 während der Gewindeherstellung.

Bei der zweiten Ausführungsform der Stell- und Kontereinheit nach Figur 2 ist keine Zentrierung der Stellmutter 2 hinsichtlich der Kontermutter 3 vorgesehen. Hier dient als Abstützung alternativ zu den Schrauben 11 der ersten Ausführungsform eine Scheibe 16 zwischen den beiden Muttern 2 und 3. Diese Scheibe 16 ist eine Scheibe aus einem Schichtblech und sorgt in ihrer ursprünglichen Dicke für einen Abstand zwischen der Stellmutter 2 und der Kontermutter 3 während des Gewindeschneidens. Nach dem Gewindeschneiden wird die Scheibe 16 nach dem Lösen der Zugschrauben 4 entweder gegen eine Scheibe geringerer Dicke ausgetauscht, oder von der Scheibe 16 wird eine Blechschicht abgeschält. Die dann jedenfalls dünnere Scheibe 16 wird wieder zwischen die beiden Muttern 2 und 3 eingesetzt, wonach die beiden Muttern 2 und 3 über die Zugschrauben 4 lose miteinander verbunden werden.

Während bei der ersten Ausführungsform die Einheit 1 nach der Herstellung der Gewinde 12 und 13 der beiden Muttern 2 und 3 einbaubereit ist, muß bei der zweiten Ausführungsform die ursprüngliche Scheibe 16 gegen eine dünnere Scheibe ausgetauscht werden bzw. von der ursprünglichen Scheibe 16 muß eine Blechschicht abgeschält werden. Bei der ersten Ausführungsform erfolgt die Konterung nach Einstellung des gewünschten Abstandes mit Hilfe der Schrauben 11 durch Anziehen der Zugschrauben 4, während bei der zweiten Ausführungsform lediglich die Zugschrauben 4 anzuziehen sind.

Aus Figur 2 ist im übrigen zu ersehen, daß in der Kontermutter Gewindebohrungen 17 zur Aufnahme von Entkonterungsschrauben vorgesehen sind. Figur 3 zeigt schließlich auch noch zwei Paßstifte 18, die in Paßstiftbohrungen der beiden Muttern 2 und 3 eingesetzt sind. Die asymmetrische Anordnung der Paßstifte 18 gewährleistet eine in Umfangsrichtung korrekte Wiederzuordnung der beiden Muttern 2 und 3 nach der Veränderung der Scheibe 16 bzw. nach deren Austausch.

Statt einer ebenen Scheibe 16 kann als Zwischenlage zwischen den beiden Muttern 2 und 3 auch eine Scheibe 19 verwendet werden, die an einer Stirnseite vorstehende Noppen 20 und an der anderen Stirnseite entsprechende Vertiefungen 21 aufweist, deren Tiefe der Höhe s der Noppen 20 entspricht. Die Höhe der Noppen 20 soll dem für die Annäherung der Kontermutter 3 an die Stellmutter 2 zwecks zuverlässiger Konterung gerade notwendigen Weg entsprechen, wodurch beim Anziehen der Zugschrauben 4 unter Verformung 22 die Noppen 20 flachgedrückt werden. Die dann beiderseits plane Scheibe 19 verhindert auch bei weiterer Steigerung der Zugkraft der Schrauben sowohl eine Beschädigung der Gewinde der Spindel und beider Muttern, als auch deren unerwünschte Verformung.

## Patentansprüche

1. Stell- und Kontereinheit, bestehend aus einer Stellmutter, einer Kontermutter und mindestens zwei in der Stellmutter eingeschraubten und an der Kontermutter abgestützten Zugschrauben, **dadurch gekennzeichnet,** daß zwischen den einander zugewandten Flächen der beiden Muttern zusätzliche, axiale Abstützmittel vorgesehen sind und beide Muttern axial miteinander fluchtende, identische Gewinde aufweisen, wobei für den Kontervorgang die Abstützmittel in ihrer Axialerstreckung, die den Abstand zwischen der Stellmutter (2) und der Kontermutter (3) bestimmt, verkürzbar ausgebildet sind.

2. Einheit nach Anspruch 1**, dadurch gekennzeichnet,** daß als axiale Abstützmittel mindestens zwei Schrauben (11) in die Kontermutter (3) eingeschraubt sind, die sich an der der Kontermutter (3) zugewandten Fläche (14) der Stellmutter (2) abstützen.

3. Einheit nach Anspruch 1, **dadurch gekennzeichnet**, daß als axiales Abstützmittel eine in ihrer Dicke veränderliche Scheibe (16) vorgesehen ist.

4. Einheit nach Anspruch 3, **dadurch gekennzeichnet,** daß die Scheibe (16) aus schälbarem Schichtblech besteht.

5. Einheit nach einem der vorhergehenden Ansprüche, **dadurch gekennzeichnet**, daß zur korrekten Wiederzuordnung der beiden Muttern (2, 3) in Umfangsrichtung nach vorausgehender Trennung Paßstiftbohrungen mit eingesetzten Paßstiften (18) in den beiden Muttern (2, 3) vorgesehen sind.

6. Einheit nach einem der vorhergehenden Ansprüche, **dadurch gekennzeichnet,** daß in der Kontermutter (3) mindestens zwei über ihre gesamte Axialerstreckung durchgehende Gewindebohrungen (17) zur Einführung von Entkonterungsschrauben vorgesehen sind.

7. Einheit nach Anspruch 1, **dadurch gekennzeichnet,** daß als axiales Abstützmittel eine zwischen der Stellmutter (2) und der Kontermutter (3) eingefügte Scheibe aus einem Elastomer vorgesehen ist, deren Druckverformungskennlinie stark progressiv ansteigt.

8. Einheit nach Anspruch 7, **dadurch gekennzeichnet,** daß die Elastomerscheibe beiderseits mit den beiden Muttern (2, 3) verklebt oder dort anvulkanisiert ist.

9. Einheit nach Anspruch 8, **dadurch gekennzeichnet,** daß in die Elastomerscheibe weitere Abstützmittel höherer Härte eingefügt sind, die nach der für die Konterung des Gewindes (13) erforderlichen Verformung des Elastomers die beiden Muttern (2, 3) gegeneinander axial abstützen.

10. Einheit nach Anspruch 1 oder 3, **dadurch gekennzeichnet,** daß als verkürzbares Abstützmittel eine Scheibe (19) vorgesehen ist, die auf einer Seite mit Noppen (20) und auf der anderen Seite mit den Noppen (20) entsprechenden Vertiefungen (21) versehen ist, deren Höhe (s) der zum Kontern notwendigen Annäherung der beiden Muttern (2, 3) entspricht, und die beim Kontern durch die Kraft der Zugschrauben (4) plan gedrückt werden.

## Claims

1. Adjusting and locking assembly comprising an adjusting nut, a locknut, and at least two tension screws screwed into the adjusting nut supported on the locknut, characterized in that additional axial support means are provided between the mutually facing surfaces of the two nuts and both nuts comprise identical threads axially aligned with each other, the axial extension of the support means which determines the distance between the adjusting nut (2) and the locknut (3) being shortenable for the locking operation.

2. Assembly according to claim 1, characterized in that the axial support means are constituted by at least two screws (11) screwed into the locknut (3) and bearing on the surface (14) of the adjusting nut (2) facing the locknut (3).

3. Assembly according to claim 1, characterized in that the axial support means are constituted by a shim (16) of variable thickness.

4. Assembly according to claim 3, characterized in that the shim (16) is made of peel-off laminated sheet metal.

5. Assembly according to one of the preceding claims, characterized in that, for the correct realignment of the two nuts (2, 3) in the peripheral direction following a preceding separation, locating pin bores with inserted locating pins (18) are provided in the two nuts (2, 3).

6. Assembly according to one of the preceding claims, characterized in that at least two tapped bores (17) for the insertion of unlocking screws are provided in the locknut (3) and extend through the entire axial extent thereof.

7. Assembly according to claim 1, characterized in that the axial support means are constituted by a shim made of an elastomer which is inserted between the adjusting nut (2) and the locknut (3) and whose compression strain curve ascends in a strongly progressive manner.

8. Assembly according to claim 7, characterized in that the elastomer shim is glued or vulcanized on both sides to the two nuts (2, 3).

9. Assembly according to claim 8, characterized in that further support means of higher hardness are inserted into the elastomer shim and support the two nuts (2, 3) axially against each other after the deformation of the elastomer required for locking the thread (13) has taken place.

10. Assembly according to claim 1 or 3, characterized in that the shortenable support means are constituted by a shim (19) comprising knobs (20) on one side and depressions (21) corresponding to the knobs (20) on the other side, whose height (s) corresponds to the approach of the nuts (2, 3) required for locking and which are pressed flat during locking by the force of the tension screws (4).

## Revendications

1. Ensemble de serrage et de contre-serrage comprenant un écrou de serrage, un écrou de contre-serrage et au moins deux vis de tension vissées dans l'écrou de serrage et supportées par l'écrou de contre-serrage, caractérisé en ce que des moyens axiaux supplémentaires de support sont prévus entre les surfaces en vis-à-vis des deux écrous et en ce que les deux écrous comportent des taraudages identiques qui sont mutuellement axialement alignés, la longueur axiale des moyens de support qui définit l'écart entre l'écrou de serrage (2) et l'écrou de contre-serrage (3) pouvant être raccourcie pour effectuer le contre-serrage.

2. Ensemble selon la revendication 1, caractérisé en ce que les moyens axiaux de support sont constitués par au moins deux vis (11) qui sont vissées dans l'écrou de contre-serrage (3) et supportées sur la surface (14) de l'écrou de serrage (2) située en face de l'écrou de contre-serrage (3).

3. Ensemble selon la revendication 1, caractérisé en ce que le moyen axial de support est constitué par une rondelle (16) à épaisseur variable.

4. Ensemble selon la revendication 3, caractérisé en ce que la rondelle (16) est réalisée en une tôle stratifiée épluchable.

5. Ensemble selon l'une des revendications précédentes, caractérisé en ce que, pour le réalignement correct des deux écrous (2, 3) en direction périphérique à la suite d'une précédente séparation, il est prévu dans les deux écrous (2, 3) des alésages pour des chevilles de positionnement avec des chevilles de positionnement (18) insérées.

6. Ensemble selon l'une des revendications précédentes, caractérisé en ce que, dans l'écrou de contre-serrage (3), sont prévus au moins deux alésages taraudés (17) qui s'étendent sur toute la longueur axiale de celui-ci et qui servent à recevoir des vis de neutralisation de contre-serrage.

7. Ensemble selon la revendication 1, caractérisé en ce que le moyen axial de support est constitué par une rondelle en élastomère qui est insérée entre l'écrou de serrage (2) et l'écrou de contre-serrage (3) et dont la caractéristique de déformation sous pression augmente de manière fortement progressive.

8. Ensemble selon la revendication 7, caractérisé en ce que la rondelle en élastomère est collée ou vulcanisée de part et d'autre des deux écrous (2, 3).

9. Ensemble selon la revendication 8, caractérisé en ce que, dans la rondelle en élastomère, sont insérés des moyens supplémentaires de support à dureté plus élevée qui, après la déformation de l'élastomère nécessaire au contre-serrage du taraudage (13), supportent les deux écrous (2, 3) axialement l'un contre l'autre.

10. Ensemble selon la revendication 1 ou 3, caractérisé en ce que le moyen de support raccourcissable est constitué par une rondelle (19) qui comporte sur une face, des boutons (20), et sur l'autre face, des cavités (21) correspondant aux boutons (20), dont la hauteur (s) correspond au rapprochement des deux écrous (2, 3) nécessaire au contre-serrage et qui, lors du contre-serrage, sont aplatis par la force exercée par des vis de tension (4).
